# EUROPEAN PATENT SPECIFICATION

(11) **EP 4 376 278 B1**
(45) Date of publication and mention of the grant of the patent: **04.02.2026**
(21) Application number: 23206583.9
(22) Date of filing: 30.10.2023
(51) Int. Cl.: H02M 1/00, H02M 1/34, H02M 3/335

(54) **METHOD FOR OPERATING POWER CONVERTER, SEMICONDUCTOR CHIP AND POWER CONVERTER**
VERFAHREN ZUM BETREIBEN EINES STROMRICHTERS, HALBLEITERCHIP UND STROMRICHTER
PROCÉDÉ DE FONCTIONNEMENT D'UN CONVERTISSEUR DE PUISSANCE, PUCE À SEMI-CONDUCTEUR ET CONVERTISSEUR DE PUISSANCE

(30) Priority: 23.11.2022 CN 202211476002; 30.03.2023 US 202318193593
(43) Date of publication of application: 29.05.2024
(73) Proprietor: Diodes Incorporated, Plano, Texas 75024 (US)
(72) Inventor: HUANG, Feng-jung, Plano (US)
(74) Representative: Marks & Clerk LLP

(56) References cited:
- US-A1- 2020 091 826
- US-A1- 2022 190 704
- US-A1- 2022 255 455

## Description

### CROSS-REFERENCES TO RELATED APPLICATIONS

This application claims priority to U.S. Patent Application No. 18/193,593, filed November 23, 2022, and entitled "METHOD FOR OPERATING POWER CONVERTER, SEMICONDUCTOR CHIP AND POWER CONVERTER", and Chinese patent application No. 202211476002.9, filed on November 23, 2022 and entitled "Self-Adjusting Soft Switching in Flyback Converter'.

### TECHNICAL FIELD

The present invention relates to a power converter, a semiconductor chip, and a method for operating the power converter, in particular to a power converter capable of reducing switching loss.

### BACKGROUND

Flyback power converters are often used in a variety of electronic products because of their simple architecture and ability to provide electrical isolation through a transformer therein. However, when switching a switch of the primary coil, the conventional flyback power converter does not discharge the parasitic capacitor on the terminal of the switch, but turns on the switch in the form of a hard switching, so the switching loss is serious. Therefore, how to design a more efficient power converter has become an urgent problem to be solved.

US2020091826A1 describes a control circuit for a flyback converter configured to adjust a conduction time of an auxiliary switch of the flyback converter in accordance with a drain-source voltage of a main switch of the flyback converter when the main switch is turned on. The flyback converter can include: a main power stage having the main switch to control energy storage and transmission of a transformer; and a clamp circuit having an auxiliary switch to provide a release path for releasing energy of leakage inductance of the transformer.

US2022190704A1 describes a control circuit for a switching converter having a main power switch and an auxiliary power switch, where the control circuit is configured to: charge and discharge a junction capacitor of the main power switch during a turn-off period of the main power switch; and adjust a conduction time of the auxiliary power switch according to a difference between the charged and discharged charge levels across the junction capacitor.

US2022255455A1 describes a converter and a power adapter. The converter includes: a DC power supply, a primary power transistor, an auxiliary power transistor, a first capacitor, a transformer, and a control circuit. The first capacitor is connected in series to the transformer to form a series circuit, the series circuit is connected in parallel to a first terminal and a second terminal of the auxiliary power transistor. The control circuit is configured to: when an excitation current in the transformer is in a continuous state, regulate a target voltage to a preset voltage threshold, and control the primary power transistor to be turned on when first dead time ends, where the target voltage is a voltage between the first terminal of the primary power transistor and the ground.

### SUMMARY

Embodiments of the present disclosure relate to a power converter as is defined in claim 1.

Another embodiment of the present disclosure relates to a chip including the control circuit in the power converter.

Another embodiment of the present disclosure relates to a method for operating a power converter as is defined in claim 10.

Since the length of time for which the clamp switch is turned on next time can be determined by the power converter of the present disclosure according to the amplitude of the node voltage of the common node before the main switch is turned on each time, the voltage of the common node can be pulled down to a predetermined range in different circuits and environments, thereby effectively suppressing a switching loss of the main switch.

### BRIEF DESCRIPTION OF THE DRAWINGS

Aspects of several embodiments of the disclosure may be best understood from the following detailed description when read with the accompanying drawings. It will be noted that the various structures may not be drawn to scale. In fact, the dimensions of the various structures may be arbitrarily expanded or reduced for clarity of discussion.
FIG. 1 is a schematic diagram of a power converter according to an embodiment of the present disclosure;
FIG. 2 is a flow chart of a method for operating the power converter of FIG. 1 according to an embodiment of the present disclosure;
FIG. 3 is an operation timing diagram of the power converter of FIG. 1 according to the method for FIG. 2;
FIG. 4 is an operation timing diagram of the power converter of FIG. 1 according to another embodiment;
FIG. 5 is an operation timing diagram of the power converter of FIG. 1 according to another embodiment;
FIG. 6 is a schematic diagram of a power converter according to another embodiment of the present disclosure;
FIG. 7 is a schematic diagram of a power converter according to another embodiment of the present disclosure;
FIG. 8 is a schematic diagram of a power converter according to another embodiment of the present disclosure.

The same reference numbers are used throughout the drawings and the detailed description to refer to the same or like parts. Several embodiments of the present disclosure will be readily understood from the following detailed description taken in conjunction with the accompanying drawings.

### DETAILED DESCRIPTION OF THE EMBODIMENTS

The following disclosure provides many different embodiments or examples for implementing different features of the provided subject matter. Specific examples of components and configurations are described below. These are, of course, merely examples and are not intended to be limiting. In the present disclosure, references to forming a first feature over or on a second feature may include embodiments that form the first and second features into direct contact, and may also include embodiments that may form additional features between the first and second features such that the first and second features may not be in direct contact. In addition, the present disclosure may repeat reference numerals and/or letters in the various examples. This repetition is for the sake of simplicity and clarity and does not dictate a relationship between the various embodiments and/or configurations discussed.

Embodiments of the present disclosure are discussed in detail below. However, the present disclosure provides many applicable concepts that can be embodied in a wide variety of specific contexts. The embodiments discussed are merely illustrative and do not limit the scope of the disclosure.

The present disclosure provides a power converter, a semiconductor chip, and a method for operating the power converter. The disclosed power converter includes a transformer, a clamp capacitor, a main switch, a clamp switch, and a control circuit. The first terminal of the clamp capacitor is coupled to the first terminal of the primary coil of the transformer, and the main switch is connected in series between the second terminal of the primary coil and a ground terminal. The clamp switch is connected in series between the second terminal of the clamp capacitor and the first terminal of the main switch, and the second terminal of the clamp switch, the first terminal of the main switch and the second terminal of the primary coil intersect at a common node. The control circuit periodically turns on the main switch and turns on the clamp switch for a period before turning on the main switch to generate a reverse current. After the clamp switch is turned on and before the main switch is turned on, the control circuit turns off the clamp switch to discharge an equivalent capacitor on the common node, and determines the length of time for which the clamp switch is turned on next time according to the relationship between the voltage of the common node and the threshold voltage before the main switch is turned on. Since the length of time for which the clamp switch is turned on next time can be determined by the power converter of the present disclosure according to the amplitude of the node voltage of the common node before the main switch is turned on each time, the voltage of the common node can be pulled down to a predetermined range in different circuits and environments, thereby effectively suppressing a switching loss of the main switch.

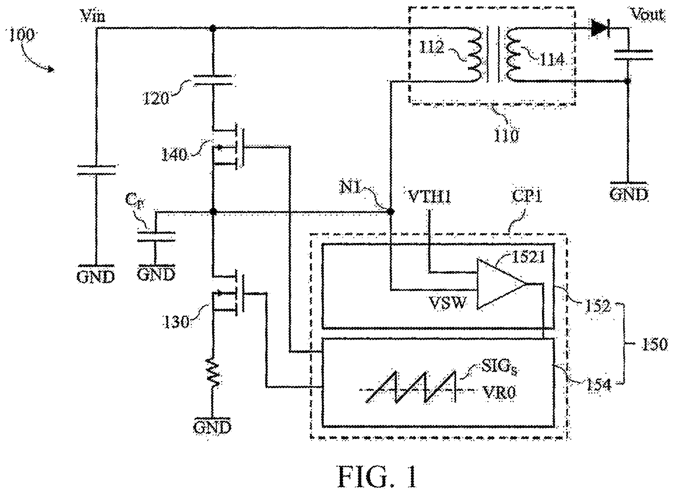

FIG. 1 is a schematic diagram of a power converter according to an embodiment of the present disclosure. As shown in FIG. 1, a power converter 100 may include a transformer 110, a clamp capacitor 120, a main switch 130, a clamp switch 140, and a control circuit 150. In this embodiment, the power converter may be, for example, an active clamp flyback power converter.

The transformer 110 includes a primary coil 112 and a secondary coil 114. A first terminal of the primary coil 112 may receive an input voltage Vᵢₙ, and the secondary coil 114 may induce and output an output voltage Vₒᵤₜ according to a change in current on the primary coil 112. The clamp capacitor 120 has a first terminal and a second terminal, and the first terminal of the clamp capacitor 120 may be coupled to the first terminal of the primary coil 112. The main switch 130 is connected in series between the second terminal of the primary coil 112 and the ground terminal GND. The clamp switch 140 has a first terminal and a second terminal, the first terminal of the clamp switch 140 may be coupled to the second terminal of the clamp capacitor 120, and the second terminal of the clamp switch 140 may be coupled to the first terminal of the main switch 130. That is, the clamp switch 140 may be connected in series between the clamp capacitor 120 and the main switch 130, and a second terminal of the clamp switch 140 may also be coupled to the second terminal of the primary coil 112 such that the second terminal of the clamp switch 140, the first terminal of the main switch 130, and the second terminal of the primary coil 112 intersect at a common node N1.

The power converter 100 may be primarily operated in two stages. In the first stage, the control circuit 150 may turn on the main switch 130, at which time the primary coil 112 may receive input voltage Vᵢₙ and store energy. Then, in the second stage, the control circuit 150 may turn off the main switch 130, at which time the energy stored in the primary coil 112 is transferred to the secondary coil 114 by electromagnetic induction, and energy is transferred to the output terminal via the secondary coil 114 to maintain the output voltage Vₒᵤₜ. In addition, in the second stage, the power converter 100 may also store the leakage inductance energy of the primary coil 112 through the clamp capacitor 120, enabling the power converter 100 to have a high power conversion efficiency. By repeatedly performing the operations of the first stage and the second stage, the power converter 100 can stably convert the input voltage Vᵢₙ into the output voltage Vₒᵤₜ and output same.

However, when the main switch 130 is turned on, if the node voltage VSW of the common node N1 is relatively high, the main switch 130 will be turned on when the drain-source voltage is relatively high, and at this time, the main switch 130 will generate a relatively large switching loss, which is equivalent to enabling the main switch 130 to be turned on in a hard switching state. In order to solve this problem, in this embodiment, the control circuit 150 may turn on the clamp switch 140 for a period and then turn off before turning on the main switch 130 each time to pull down the node voltage VSW of the common node N1, thereby reducing the drain-source voltage of the main switch 130 and reducing a switching loss of the main switch 130, which is equivalent to enabling the main switch 130 to be turned on in a soft switching state. In addition, in order to enable the drain voltage of the main switch 130 to be pulled down to a predetermined range to make the main switch 130 be turned on in the soft switching state as much as possible, in this embodiment, the control circuit 150 may detect whether the node voltage VSW of the common node N1 is sufficiently low before turning on the main switch 130 each time, and determine the length of time for which the clamp switch 140 is turned on next time according to the embodiment.

As shown in FIG. 1, the control circuit 150 may include a voltage detector 152 and a control signal generator 154. The voltage detector 152 may compare node voltage VSW of common node N1 with threshold voltage VTH1. In this embodiment, VTH1 is set to 10 volts, however, a person skilled in the art may change its value as desired without being limited by this embodiment. The control signal generator 154 may generate a main control signal SIG_{M1} to control the main switch 130 and a clamp control signal SIG_{C1} to control the clamp switch 140. The control signal generator 154 may periodically turn on the main switch 130 so that the power converter 100 can alternately and repeatedly perform the first and second stages of operation.

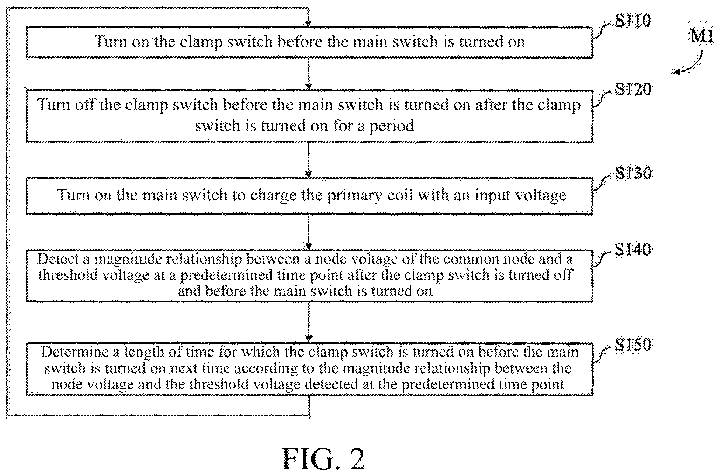

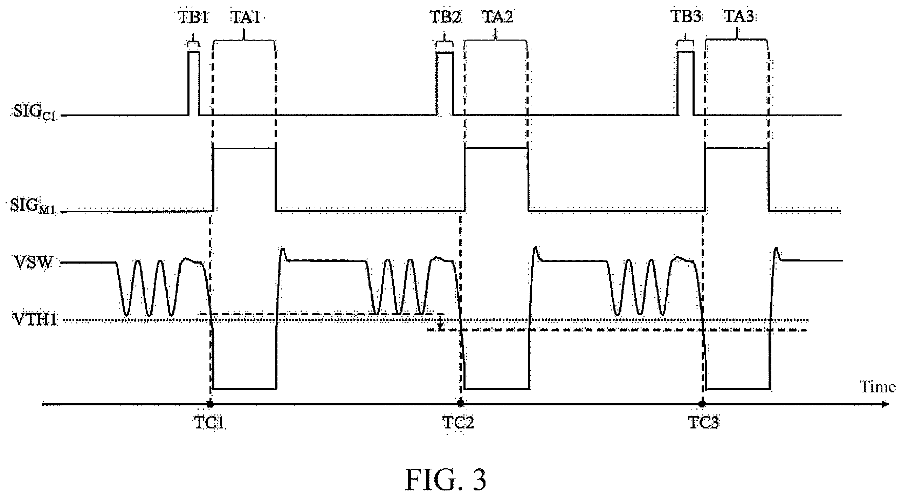

FIG. 2 is a flowchart of a method for operating M1 of the power converter 100 according to an embodiment of the present disclosure; FIG. 3 is an operation timing diagram of the power converter 100 according to the method M1. As shown in FIG. 2, the method M1 may include repeating the steps S110 to S150. In this embodiment, the main switch 130 may be, for example, an N-type transistor, so in FIG. 3, when the main control signal SIG_{M1} is at a logic high potential, the main switch 130 will be turned on, and the power converter 100 operates in the first stage; when the main control signal SIG_{M1} is at a logic low level, the main switch 130 is turned off and the power converter 100 operates in the second stage. In addition, the clamp switch 140 may be, for example, an N-type transistor, such that when the clamp control signal SIG_{C1} is at a logic high potential, the clamp switch 140 is turned on, and when the clamp control signal SIG_{C1} is at a logic low potential, the clamp switch 140 is turned off.

In this case, as shown in FIG. 3, the clamp switch 140 is turned on during the periods TB1, TB2 and TB3, the clamp switch 140 is turned off after the periods TB1, TB2 and TB3, and the main switch 130 is turned on during the periods TA1, TA2 and TA3. Further, the voltage detector 152 detects the magnitude relationship between the node voltage VSW of the common node N1 and the threshold voltage VTH1 at predetermined time points TC1, TC2 and TC3 before the periods TA1, TA2 and TA3, and determines the length of time for which the next clamp switch 140 is turned on.

For ease of understanding, the following description may refer to FIGS. 1, 2, and 3 simultaneously. In this embodiment, the control circuit 150 may turn on the clamp switch 140 (step S110) before each time the main switch 130 is turned on to generate a reverse current into the second terminal of the primary coil 112. After the clamp switch 140 is turned on for a period, the control circuit 150 turns off the clamp switch 140 before turning on the main switch 130 (step S120), at which time the reverse current draws a charge from the equivalent capacitor Cₚ on the common node N1, i.e., discharges the equivalent capacitor Cₚ, thereby pulling down the voltage of the node voltage VSW of the common node N1. As a result, the main switch 130 can be turned on with a small drain-source voltage (step S130), thereby reducing a switching loss of the main switch 130.

Since the equivalent capacitor Cₚ on the common node N1 may include the overall equivalent capacitor of a plurality of capacitors, such as the parasitic capacitor of the main switch 130, the parasitic capacitor of the clamp switch 140 and the mirror capacitor at the corresponding position on the secondary side, the magnitude of the equivalent capacitor Cₚ may be related to the manufacturing process, the circuit where it is located and the operating environment (e.g. temperature). In this case, even if the power converter 100 is generated based on the same design, the equivalent capacitor Cₚ on its common node N1 may be different in actual operation. That is, each of the power converters 100 must discharge the equivalent capacitor Cₚ differently in order to pull down the node voltage VSW to the appropriate range.

In order to enable the main switches in different power converters 100 to be turned on in the soft switching state; in this embodiment, the control signal generator 154 may determine the magnitude relationship between the node voltage VSW and the threshold voltage VTH1 detected by the voltage detector 152 at a predetermined time point after the clamp switch 140 is turned off and before the main switch 130 is turned on (step S140), and determine a length of time that the clamp switch 140 is turned on before the main switch 130 is turned on next time (step S150). Thus, the voltage of the common node N1 can be pulled down by passing an appropriate discharge current before the main switch 130 is turned on next time, thereby more effectively suppressing a switching loss of the main switch 130.

For example, as shown in FIG. 3, the node voltage VSW detected by the voltage detector 152 at the time point TC1 is greater than the threshold voltage VTH1 before the time period TA1 when the main switch 130 is turned on, indicating that the drain-source voltage of the main switch 130 is still high when the main switch is turned on at the time period TA1, so that the control signal generator 154 may extend the length of time for which the clamp switch 140 is turned on before the main switch 130 is turned on next time (i.e., before the time period TA2) to increase the backflow into the second terminal of the primary coil 112. That is, the length of the time period TB2 during which the clamp switch 140 is turned on for the second time is greater than that of the time period TB1 during which the clamp switch 140 is turned on for the first time, so that the clamp switch 140 will be turned on longer in the time period TB2 and generate a larger reverse current so that the power converter 100 can discharge the equivalent capacitor Cₚ by the larger reverse current during the time period after the clamp switch 140 is turned off and before the main switch 130 is turned on (i.e., the time period between the time periods TB2 and TA2), thereby pulling the node voltage VSW further down to a lower level before the main switch 130 is turned on. As shown in FIG. 3, the node voltage VSW detected by the voltage detector 152 at a time point TC2 is smaller than the node voltage VSW detected by the voltage detector 152 at a time point TC1, so that the switching loss when the main switch 130 is turned on again at the time period TA2 is low.

Further, in this embodiment, when the voltage detector 152 detects that the node voltage VSW is less than the threshold voltage VTH1 at the predetermined time point TC2, the control signal generator 154 maintains and fixes the length of time for which the clamp switch 140 is turned on before the main switch 130 is turned on subsequently each time. For example, in FIG. 3, since the node voltage VSW detected by the voltage detector 152 at the time point TC2 is less than the threshold voltage VTH1, the control signal generator 154 may cause the clamp switch 140 to be turned on next time for a same length of time, i.e., the length of the time period TB3 may be equal to that of the time period TB2.

However, this application is not limited thereto. In some embodiments, the operating environment of the power converter 100, such as temperature, may change over time, and the input voltage Vᵢₙ may also change over time in a test environment; in this case, the time that the fixed clamp switch 140 is turned on may not effectively suppress a switching loss of the main switch 130 for a long time. Thus, the control signal generator 154 may also adjust the time that the clamp switch 140 is turned on according to other mechanisms, not necessarily making the time that subsequent clamp switches 140 are turned on be fixed.

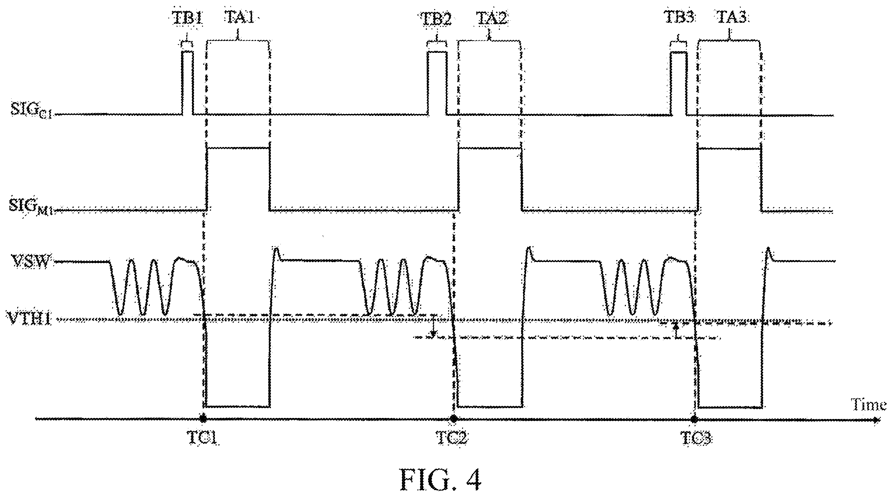

FIG. 4 is an operation timing diagram of the power converter 100 according to another embodiment. In FIG. 4, when the voltage detector 152 detects that the node voltage VSW is greater than the threshold voltage VTH1 at the time point TC1, the control signal generator 154 may extend the clamp switch 140 is turned on next time, such that the length of the time period TB2 is greater than that of the time period TB1. However, when the voltage detector 152 detects that the node voltage VSW is less than the threshold voltage VTH1 at the time point TC2, the control signal generator 154 may shorten the clamp switch 140 is turned on next time, such that the length of the time period TB3 is less than that of the time period TB2. As such, the control signal generator 154 may also dynamically adjust the time that the clamp switch 140 is turned on as operating conditions change.

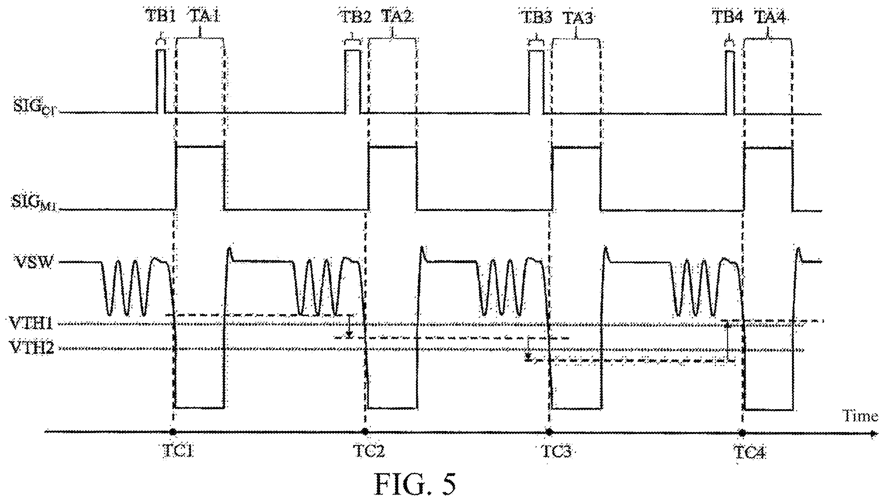

FIG. 5 is an operation timing diagram of the power converter 100 according to another embodiment. In the embodiment of FIG. 5, the voltage detector 152 may compare the node voltage VSW with two threshold voltages VTH1 and VTH2 at predetermined time points TC1, TC2, TC3 and TC4, and adjust the length of time for which the next clamp switch 140 is turned on according to the magnitude relationship between the node voltage VSW and the threshold voltages VTH1 and VTH2, where the threshold voltage VTH2 is less than the threshold voltage VTH1.

For example, when the voltage detector 152 detects that node voltage VSW is greater than threshold voltage VTH1 at the time point TC1, the control signal generator 154 may extend the length of time for which the clamp switch 140 is turned on next time, such that the length of the time period TB2 is greater than that of the time period TB1. When voltage detector 152 detects that node voltage VSW is less than threshold voltage VTH1 and greater than threshold voltage VTH2 at the time point TC2, control signal generator 154 may maintain the length of time for which the clamp switch 140 is turned on next time, such that the length of the time period TB3 is equal to that of the time period TB2. However, if the voltage detector 152 detects that node voltage VSW is less than threshold voltage VTH2 at the time point TC3, the control signal generator 154 may shorten the length of time for which the clamp switch 140 is turned on next time, such that the length of the time period TB4 is less than that of the time period TB3. In this embodiment, VTH1 is set to 10 volts and VTH2 is set to 5 volts, however a person skilled in the art may change their values as desired without being limited by this embodiment.

That is, the control signal generator 154 adjusts the length of time for which the clamp switch 140 is turned on next time only when the node voltage VSW is greater than the threshold voltage VTH1 or less than the threshold voltage VTH2, and maintains the length of time for which the clamp switch 140 is turned on next time when the node voltage VSW is between the threshold voltage VTH1 and the threshold voltage VTH2. As such, it is possible to avoid adjusting the time of turning on the clamp switch 140 too frequently, thereby achieving a hysteresis-like control effect. In other embodiments, the power converter 100 may be provided with more than two threshold voltages as desired.

Further, in the embodiment of FIG. 1, the voltage detector 152 may include a comparator 1521. A first terminal of the comparator 1521 may be coupled to a first terminal of the main switch 130, and a second terminal of the comparator 1521 may receive the threshold voltage VTH1. That is, the voltage detector 152 may directly compare the node voltage VSW of the common node N1 with the threshold voltage VTH1 through the comparator 1521. However, the present disclosure is not limited thereto. In some embodiments, directly using node voltage VSW as the input voltage to the comparator 1521 may result in damage to the comparator 1521 because node voltage VSW may have a higher voltage value. In this case, the voltage detector 152 may compare the magnitude relationship between the node voltage VSW and the threshold voltage VTH1 in other manners.

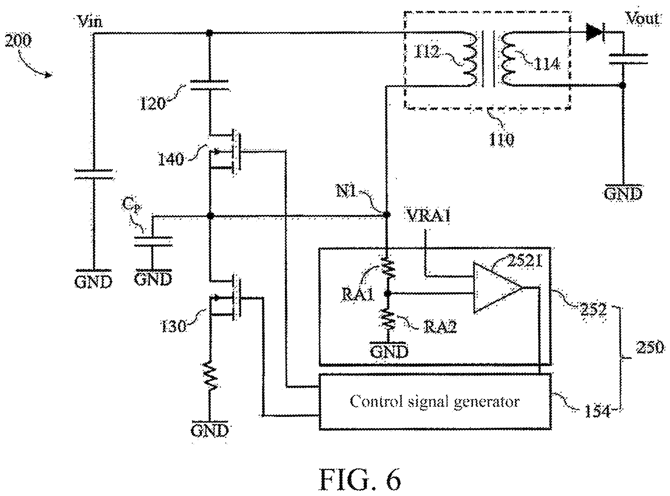

FIG. 6 is a schematic diagram of a power converter according to another embodiment of the present disclosure. The power converter 200 may have a similar structure and operate according to similar principles as the power converter 100, however, the voltage detector 252 in the power converter 200 may include resistors RA1, RA2 and comparator 2521. A first terminal of the resistor RA1 may be coupled to a first terminal of a main switch 130, a first terminal of the resistor RA2 may be coupled to a second terminal of the resistor RA1, and a second terminal of the resistor RA2 may be coupled to a ground terminal GND. Further, a first terminal of the comparator 2521 may be coupled to a second terminal of the resistor RA1, and a second terminal of the comparator 2521 may receive a reference voltage VRA1 corresponding to the threshold voltage VTH1.

That is, the voltage detector 252 may divide node voltage VSW through resistors RA1 and RA2 to reduce the voltage received at the first terminal of the comparator 2521. In this case, the reference voltage VRA1 may also be less than the threshold voltage VTH1, and the ratio of the reference voltage VRA1 to the threshold voltage VTH1 may be equal to that of the resistor RA2 to the sum of the resistances RA1 and RA2, i.e., RA2/(RA1 + RA2). As such, the voltage detector 252 may be implemented using a conventional low withstand voltage comparator 2521.

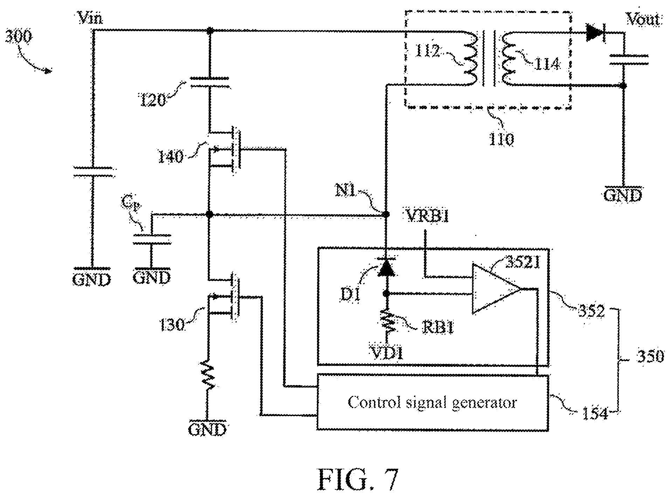

FIG. 7 is a schematic diagram of a power converter according to another embodiment of the present disclosure. The power converter 300 may have a similar structure and operate according to similar principles as a power converter 100, however, the voltage detector 352 in the power converter 300 may include a diode D1, a resistor RB1, and a comparator 3521. A cathode of the diode D1 may be coupled to a first terminal of the main switch 130, a first terminal of the resistor RB1 may be coupled to an anode of diode D 1, and a second terminal of the resistor RB1 may receive a predetermined bias voltage VD1. A first terminal of the comparator 3521 may be coupled to a first terminal of the resistor RB1, and a second terminal of the comparator 3521 may receive a reference voltage VRB1 corresponding to the threshold voltage VTH1.

In this embodiment, the predetermined bias voltage VD1 may be greater than the reference voltage VRB1. In this case, when the node voltage VSW is greater than the predetermined bias voltage VD1, the diode D1 will be in a reverse bias state, so that the first terminal of the comparator 3521 will receive the predetermined bias voltage VD1, at which time the comparator 3521 will output the first voltage. Conversely, when the node voltage VSW is less than the predetermined bias voltage VD1 minus the threshold voltage of the diode D1, the diode D1 will be in a forward bias state, so that the first terminal of the comparator 3521 will receive the node voltage VSW plus the threshold voltage of the diode D1, at which time the comparator 3521 will output a second voltage different from the first voltage. That is, by appropriately setting the predetermined bias voltage VD1 and the reference voltage VRB1, it is possible for the comparator 3521 to compare the node voltage VSW with the reference voltage VRB1 only when the node voltage VSW is small, thereby preventing the comparator 3521 from receiving an excessively high voltage.

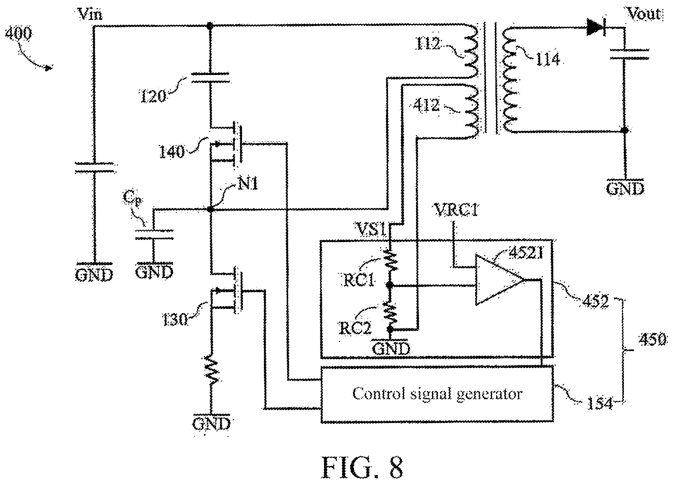

FIG. 8 is a schematic diagram of a power converter according to another embodiment of the present disclosure. The power converter 400 may have a similar structure and may operate according to similar principles as the power converter 100, however, the power converter 400 may include two primary coils 112 and 412 and the voltage detector 452 may include resistors RC1, RC2 and the comparator 4521. In this embodiment, the power converter 400 may generate the sensing voltage VS1 corresponding to the node voltage VSW through the primary coil 412, and may divide the sensing voltage VS1 through the resistors RC1 and RC2.

As shown in FIG. 8, a first terminal of the resistor RC1 may be coupled to a first terminal of the primary coil 412, a first terminal of the resistor RC2 may be coupled to a second terminal of the resistor RC1, and a second terminal of the resistor RC2 may be coupled to a second terminal of the primary coil 412 and a ground terminal GND. Further, a first terminal of the comparator 4521 may be coupled to a second terminal of the resistor RC1, and a second terminal of the comparator 4521 may receive reference voltage VRC1 corresponding to threshold voltage VTH1.

In this embodiment, since the power converter 400 generates the sensing voltage VS1 corresponding to the node voltage VSW through the primary coil 412 and divides the voltage through the resistors RC1, RC2, the influence on the node voltage VSW in the detection process can be reduced, and the input voltage of the comparator 4521 can be reduced.

Further, in the power converters 100, 200, 300 and 400, the control signal generator 154 thereof may control the clamp switch 140 by generating the clamp control signal SIG_{C1} in addition to the periodic square wave signal SIG_{M1} to control the main switch 130, and may adjust the time for which the clamp switch 140 is turned on each time by adjusting the pulse width of the clamp control signal 140. For example, in the embodiment of FIG. 1, the control circuit 150 may include an analog circuit and the control signal generator 154 may include a comparator (not shown) that may compare the reference voltage VR0 with a sawtooth wave SIGs (or a triangular wave). In this case, the control signal generator 154 may control the pulse width of the clamp control signal SIG_{C1} by adjusting the move mode of the sawtooth wave SIGs (or a triangular wave) or adjusting the level of the reference voltage VR0.

However, the present disclosure is not limited thereto, and in some other embodiments, the control circuit 150 may include a digital circuit and the control signal generator 154 may include a register and a counter. In this case, the control signal generator 154 may store a value related to the pulse width in the register, and the counter may count the clock signal in the digital circuit to control the pulse width of the clamp control signal SIG_{C1} according to the value stored in the register.

Further, in some embodiments, the control circuit 150 may be provided, for example, in a separate chip CP1, so that the circuit designer may more conveniently use the chip CP1 to detect the voltage of the primary coil therein and control the clamp switch thereof and the main switch to be turned on in various power converter designs. Similarly, the control circuits 250, 350, and 450 may also be designed as chips for use by circuit designers.

In summary, embodiments of the present disclosure provide a power converter, a semiconductor chip, and a method for operating a power converter. Since the length of time for which the clamp switch is turned on next time can be determined by the power converter of the present disclosure according to the amplitude of the node voltage of the common node before the main switch is turned on each time, the voltage of the common node can be pulled down to a predetermined range in different circuits and environments, thereby effectively suppressing a switching loss of the main switch.

Spatially relative terms, such as "below", "under", "lower", "above", "upper", "left", "right", and the like, may be used herein for ease of description to describe relationship between one component or feature and another component(s) or feature(s) as illustrated in the figures. Spatially relative terms are intended to encompass different orientations of the device in use or operation in addition to the orientation depicted in the figures. The devices may be otherwise oriented (rotated 90 degrees or at other orientations) and the spatially relative descriptors used herein may be interpreted in a corresponding manner. It will be understood that when an element is referred to as being "connected" or "coupled" to another element, it can be directly connected or coupled to the other element or intervening elements may be present.

As used herein, the terms "about", "substantially", "generally", and "approximately" are used to describe and explain minor variations. When used in connection with an event or circumstance, the term can refer to instances where the event or circumstance occurs precisely as well as instances where the event or circumstance occurs nearly. As used herein with respect to a given value or range, the term "about" generally means within ± 10%, ± 5%, ± 1%, or ± 0.5% of the given value or range. Ranges can be expressed herein as from one endpoint to another endpoint, or between two endpoints. All ranges disclosed herein are inclusive of the endpoints, unless otherwise specified. The term "substantially coplanar" can mean that two surfaces are positioned within a few micrometers (µm) of difference in position along the same plane, such as within 10 µm, within 5 µm, within 1 µm, or within 0.5 µm of difference in position along the same plane. When numerical values or characteristics are referred to as being "substantially" the same, the term can refer to values that are within ± 10%, ± 5%, ± 1%, or ± 0.5% of the average of the stated values.

The foregoing has outlined features of several embodiments and detailed aspects of the disclosure. The embodiments described in the present disclosure may be readily utilized as a basis for designing or modifying other processes and structures for carrying out the same or similar purposes and/or to achieve the same or similar advantages of the embodiments described herein. Such equivalent constructions do not depart from the scope of the present disclosure, and various changes, substitutions, and alterations may be made without departing from the scope of the present disclosure.

In addition to or as an alternative to the above, the following examples are described. The features described in any of the following examples may be utilized with any of the other examples described herein.

## Claims

1. A power converter comprising:
a transformer (110) comprising a first primary coil (112) and a secondary coil (114), a first terminal of the first primary coil being arranged to receive an input voltage, and the secondary coil being arranged to generate an output voltage;
a clamp capacitor (120) having a first terminal coupled to the first terminal of the first primary coil;
a main switch (130) connected in series between a second terminal of the first primary coil and a ground terminal;
a clamp switch (140) having a first terminal coupled to a second terminal of the clamp capacitor, and a second terminal coupled to a first terminal of the main switch, the clamp switch being connected in series between the clamp capacitor and the main switch, and the second terminal of the clamp switch being further coupled to the second terminal of the first primary coil, so that the second terminal of the clamp switch, the first terminal of the main switch and the second terminal of the first primary coil intersect at a common node (N1); and
a control circuit (150) comprising:
a voltage detector (152) for comparing a node voltage of the common node with a first threshold voltage and a second threshold voltage; and
a control signal generator (154) configured to periodically:
turn on the main switch,
turn on the clamp switch before the main switch is turned on to generate a reverse current flowing into the second terminal of the first primary coil,
turn off the clamp switch before the main switch is turned on to discharge an equivalent capacitor (Cₚ) on the common node through the reverse current after the clamp switch is turned on for a period, and
determine a length of time for which the clamp switch is turned on before the main switch is turned on next time according to a magnitude relationship, detected by the voltage detector, between the node voltage and the first and second threshold voltages after the clamp switch is turned off and at a predetermined time point before the main switch is turned on, thereby controlling the voltage of the common node before the main switch is turned on next time to suppress a switching loss of the main switch,
wherein:
the second threshold voltage is less than the first threshold voltage; and
when the voltage detector detects that the node voltage is less than the first threshold voltage and greater than the second threshold voltage at the predetermined time point, the control signal generator is configured to maintain the length of time for which the clamp switch is turned on before the main switch is turned on;
when the voltage detector (152) detects that the node voltage is greater than the first threshold voltage at the predetermined time point, the control signal generator (154) is configured to extend the length of time for which the clamp switch (140) is turned on before the main switch (130) is turned on next time; and
when the voltage detector (152) detects that the node voltage is less than the second threshold voltage at the predetermined time point, the control signal generator (154) is configured to shorten the length of time for which the clamp switch (140) is turned on before the main switch (130) is turned on next time.

2. The power converter according to claim 1 wherein the voltage detector (152) comprises a first comparator (1521) having a first terminal (VSW) coupled to the first terminal of the main switch (130), and a second terminal (VTH1) used for receiving the first threshold voltage.

3. The power converter according to claim 1 wherein the voltage detector (152) comprises a first resistor (RA1) having a first terminal coupled to the first terminal of the main switch (130); a second resistor (RA2) having a first terminal coupled to a second terminal of the first resistor, and a second terminal coupled to a ground terminal (GND); and a first comparator (2521) having a first terminal coupled to the second terminal of the first resistor, and a second terminal (VRA1) for receiving a first reference voltage corresponding to the first threshold voltage.

4. The power converter according to claim 1 wherein the voltage detector (152) comprises a diode (D1) having a cathode coupled to the first terminal of the main switch (130); a resistor (RB1) having a first terminal coupled to an anode of the diode and a second terminal for receiving a predetermined bias voltage (VD1); and a first comparator (3521) having a first terminal coupled to the first terminal of the resistor and a second terminal (VRB1) for receiving a first reference voltage corresponding to the first threshold voltage; wherein the predetermined bias voltage is greater than the first reference voltage.

5. The power converter according to claim 1, further comprising a second primary coil (412) for generating a sensing voltage corresponding to the node voltage, wherein the voltage detector (450) comprises:
a first resistor (RC1) having a first terminal coupled to a first terminal of the second primary coil;
a second resistor (RC2) having a first terminal coupled to a second terminal of the first resistor, and a second terminal coupled to a second terminal of the second primary coil and a ground terminal (GND); and
a first comparator (4521) having a first terminal coupled to the second terminal of the first resistor, and a second terminal (VRC1) for receiving a first reference voltage corresponding to the first threshold voltage.

6. The power converter according to any preceding claim, wherein the control signal generator is configured to turn on the clamp switch (140) by generating a clamp control signal (SIG_{C1}) and to adjust the time when the clamp switch is turned on each time by adjusting the pulse width of the clamp control signal.

7. The power converter according to claim 6, wherein the control circuit (150) comprises a digital circuit, and the control signal generator comprises a register and a counter, the control signal generator (154) controls the pulse width of the clamp control signal (SIG_{C1}) by storing a value associated with the pulse width in the register and causing the counter to count according to the value.

8. The power converter according to claim 6, wherein the control circuit (150) comprises an analog circuit, and the control signal generator comprises a second comparator to compare a second reference voltage with a sawtooth wave or a triangular wave, wherein the control signal generator controls a pulse width of the clamp control signal (SIG_{C1}) by adjusting a wave mode of the triangular wave or the sawtooth wave or adjusting the reference voltage.

9. A power converter according to any preceding claim, comprising a semiconductor chip comprising the control circuit (150).

10. A method (M1) for operating a power converter, wherein the power converter comprises a transformer, a main switch, a clamp capacitor and a clamp switch, the transformer comprises a primary coil and a secondary coil, the main switch is connected in series between a second terminal of the primary coil and a ground terminal, a first terminal of the clamp switch is coupled to a second terminal of the clamp capacitor, a second terminal of the clamp switch is coupled to the first terminal of the main switch and the second terminal of the primary coil, and the second terminal of the clamp switch, the first terminal of the main switch and the second terminal of the primary coil intersect at a common node, the method comprising periodically:
turning on the main switch to charge the primary coil with an input voltage (S130);
turning on the clamp switch to generate a reverse current into the second terminal of the primary coil before the main switch is turned on (S110);
turning off the clamp switch before the main switch is turned on to discharge an equivalent capacitor on the common node through the reverse current after the clamp switch is turned on for a period (S120);
detecting a magnitude relationship between a node voltage of the common node and a first and second threshold voltage at a predetermined time point after the clamp switch is turned off and before the main switch is turned on (S140); and
determining a length of time for which the clamp switch is turned on before the main switch is turned on next time according to the magnitude relationship between the node voltage and the first and second threshold voltages detected at the predetermined time point to control the voltage of the common node before the main switch is turned on next time to suppress a switching loss of the main switch (S150),
wherein:
the second threshold voltage is less than the first threshold voltage; and
wherein the step of determining a length of time for which the clamp switch is turned on before the main switch is turned on next time according to the magnitude relationship between the node voltage and the first threshold voltage detected at the predetermined time point comprises:
extending the length of time for which the clamp switch is turned on before the main switch is turned on next time when it is detected at the predetermined time point that the node voltage is greater than the first threshold voltage;
maintaining the length of time for which the clamp switch is turned on before the main switch is turned on, when it is detected that the node voltage is less than the first threshold voltage and greater than a second threshold voltage at the predetermined time point, and
shortening the length of time for which the clamp switch is turned on before the main switch is turned on next time when it is detected at the predetermined time point that the node voltage is less than the second threshold voltage.

## Patentansprüche

1. Leistungswandler, umfassend:
einen Transformator (110), der eine erste Primärspule (112) und eine Sekundärspule (114) umfasst, wobei ein erster Anschluss der ersten Primärspule angeordnet ist, um eine Eingangsspannung zu empfangen, und die Sekundärspule angeordnet ist, um eine Ausgangsspannung zu erzeugen;
einen Klemmkondensator (120), der einen ersten Anschluss aufweist, der mit dem ersten Anschluss der ersten Primärspule gekoppelt ist;
einen Hauptschalter (130), der zwischen einem zweiten Anschluss der ersten Primärspule und einem Erdungsanschluss in Reihe verbunden ist;
einen Klemmschalter (140), der einen ersten Anschluss aufweist, der mit einem zweiten Anschluss des Klemmkondensators gekoppelt ist, und einen zweiten Anschluss, der mit einem ersten Anschluss des Hauptschalters gekoppelt ist, wobei der Klemmschalter zwischen dem Klemmkondensator und dem Hauptschalter in Reihe verbunden ist und der zweite Anschluss des Klemmschalters weiter mit dem zweiten Anschluss der ersten Primärspule gekoppelt ist, sodass sich der zweite Anschluss des Klemmschalters, der erste Anschluss des Hauptschalters und der zweite Anschluss der ersten Primärspule in einem gemeinsamen Knoten (N1) schneiden; und
eine Steuerschaltung (150) umfassend:
einen Spannungsdetektor (152) zum Vergleichen einer Knotenspannung des gemeinsamen Knotens mit einer ersten Schwellenspannung und einer zweiten Schwellenspannung; und
einen Steuersignalgenerator (154), der konfiguriert ist, um periodisch:
den Hauptschalter einzuschalten,
den Klemmschalter einzuschalten, bevor der Hauptschalter eingeschaltet wird, um einen Rückstrom zu erzeugen, der in den zweiten Anschluss der ersten Primärspule fließt,
den Klemmschalter auszuschalten, bevor der Hauptschalter eingeschaltet wird, um einen äquivalenten Kondensator (Cₚ) am gemeinsamen Knoten durch den Rückstrom zu entladen, nachdem der Klemmschalter einen Zeitraum lang eingeschaltet war, und
eine Zeitdauer zu bestimmen, die der Klemmschalter eingeschaltet ist, bevor der Hauptschalter gemäß einer vom Spannungsdetektor erfassten Größenbeziehung zwischen der Knotenspannung und der ersten und zweiten Schwellenspannung nach dem Abschalten des Klemmschalters und zu einem vorbestimmten Zeitpunkt vor dem Einschalten des Hauptschalters das nächste Mal eingeschaltet wird, wodurch die Spannung des gemeinsamen Knotens vor dem nächsten Einschalten des Hauptschalters gesteuert wird, um Schaltverluste des Hauptschalters zu unterdrücken,
wobei:
die zweite Schwellenspannung kleiner ist, als die erste Schwellenspannung; und wenn der Spannungsdetektor erkennt, dass die Knotenspannung zum vorbestimmten Zeitpunkt kleiner als die erste Schwellenspannung, und größer als die zweite Schwellenspannung ist, der Steuersignalgenerator konfiguriert ist, um die Zeitdauer, die der Klemmschalter eingeschaltet ist, bevor der Hauptschalter eingeschaltet wird, beizubehalten;
wenn der Spannungsdetektor (152) erkennt, dass die Knotenspannung zum vorbestimmten Zeitpunkt größer als die erste Schwellenspannung ist, der Steuersignalgenerator (154) konfiguriert ist, um die Zeitdauer, die der Klemmschalter (140) eingeschaltet ist, bevor der Hauptschalter (130) das nächste Mal eingeschaltet wird, zu verlängern;
wenn der Spannungsdetektor (152) erkennt, dass die Knotenspannung zum vorbestimmten Zeitpunkt kleiner als die zweite Schwellenspannung ist, der Steuersignalgenerator (154) konfiguriert ist, um die Zeitdauer, die der Klemmschalter (140) eingeschaltet ist, bevor der Hauptschalter (130) das nächste Mal eingeschaltet wird, zu verkürzen.

2. Leistungswandler nach Anspruch 1, wobei der Spannungsdetektor (152) einen ersten Komparator (1521) umfasst, der einen ersten Anschluss (VSW) aufweist, der mit dem ersten Anschluss des Hauptschalters (130) gekoppelt ist, und einen zweiten Anschluss (VTH1), der zum Empfangen der ersten Schwellenspannung verwendet wird.

3. Leistungswandler nach Anspruch 1, wobei der Spannungsdetektor (152) einen ersten Widerstand (RA1) umfasst, der einen ersten Anschluss aufweist, der mit dem ersten Anschluss des Hauptschalters (130) gekoppelt ist; einen zweiten Widerstand (RA2), der einen ersten Anschluss aufweist, der mit einem zweiten Anschluss des ersten Widerstands gekoppelt ist, und einen zweiten Anschluss, der mit einem Masseanschluss (GND) gekoppelt ist; und einen ersten Komparator (2521), der einen ersten Anschluss aufweist, der mit dem zweiten Anschluss des ersten Widerstands gekoppelt ist, und einen zweiten Anschluss (VRA1) zum Empfangen einer ersten Referenzspannung, die der ersten Schwellenspannung entspricht.

4. Leistungswandler nach Anspruch 1, wobei der Spannungsdetektor (152) eine Diode (D1) umfasst, die eine an den ersten Anschluss des Hauptschalters (130) gekoppelte Kathode aufweist; einen Widerstand (RB1), der einen ersten an die Anode der Diode gekoppelten Anschluss und einen zweiten Anschluss zum Empfangen einer vorbestimmten Vorspannung (VD1) aufweist; und einen ersten Komparator (3521), der einen ersten an den ersten Anschluss des Widerstands gekoppelten Anschluss und eine zweiten Anschluss (VRB1) zum Empfangen einer ersten Referenzspannung entsprechend der ersten Schwellenspannung aufweist; wobei die vorbestimmte Vorspannung größer als die erste Referenzspannung ist.

5. Leistungswandler nach Anspruch 1, der weiter eine zweite Primärspule (412) zum Erzeugen einer der Knotenspannung entsprechenden Messspannung umfasst, wobei der Spannungsdetektor (450) Folgendes umfasst:
einen ersten Widerstand (RC1), der einen ersten Anschluss aufweist, der mit einem ersten Anschluss der zweiten Primärspule gekoppelt ist;
einen zweiten Widerstand (RC2), der einen ersten Anschluss aufweist, der mit einem zweiten Anschluss des ersten Widerstands gekoppelt ist, und einen zweiten Anschluss, der mit einem zweiten Anschluss der zweiten Primärspule und einem Masseanschluss (GND) gekoppelt ist; und
einen ersten Komparator (4521), der einen ersten Anschluss aufweist, der mit dem zweiten Anschluss des ersten Widerstands gekoppelt ist, und einen zweiten Anschluss (VRC1) zum Empfangen einer ersten Referenzspannung, die der ersten Schwellenspannung entspricht.

6. Leistungswandler nach einem vorstehenden Anspruch, wobei der Steuersignalgenerator konfiguriert ist, um den Klemmschalter (140) durch Erzeugen eines Klemmsteuersignals (SIG_{C1}) einzuschalten, und um die Zeit, wann der Klemmschalter jeweils eingeschaltet wird, durch Anpassen der Impulsbreite des Klemmsteuersignals anzupassen.

7. Leistungswandler nach Anspruch 6, wobei die Steuerschaltung (150) eine digitale Schaltung umfasst und der Steuersignalgenerator ein Register und einen Zähler umfasst, der Steuersignalgenerator (154) die Impulsbreite des Klemmsteuersignals (SIG_{C1}) durch Speichern eines mit der Impulsbreite verknüpften Werts im Register steuert und den Zähler veranlasst, entsprechend diesem Wert zu zählen.

8. Leistungswandler nach Anspruch 6, wobei die Steuerschaltung (150) eine analoge Schaltung umfasst und der Steuersignalgenerator einen zweiten Komparator umfasst, um eine zweite Referenzspannung mit einer Sägezahnwelle oder einer Dreieckswelle zu vergleichen, wobei der Steuersignalgenerator die Impulsbreite des Klemmsteuersignals (SIG_{C1}) durch Anpassen eines Wellenmodus der Dreieckswelle oder der Sägezahnwelle oder durch Anpassen der Referenzspannung steuert.

9. Leistungswandler nach einem vorstehenden Anspruch,
der einen Halbleiterchip umfasst, der die Steuerschaltung (150) umfasst.

10. Verfahren (M1) zum Betreiben eines Leistungswandlers, wobei der Leistungswandler einen Transformator, einen Hauptschalter, einen Klemmkondensator und einen Klemmschalter umfasst, der Transformator eine Primärspule und eine Sekundärspule umfasst, der Hauptschalter zwischen einem zweiten Anschluss der Primärspule und einem Masseanschluss in Reihe verbunden ist, ein erster Anschluss des Klemmschalters mit einem zweiten Anschluss des Klemmkondensators gekoppelt ist, ein zweiter Anschluss des Klemmschalters mit dem ersten Anschluss des Hauptschalters und dem zweiten Anschluss der Primärspule gekoppelt ist, und der zweite Anschluss des Klemmschalters, der erste Anschluss des Hauptschalters und der zweite Anschluss der Primärspule sich in einem gemeinsamen Knoten schneiden, wobei das Verfahren periodisch Folgendes umfasst:
Einschalten des Hauptschalters, um die Primärspule mit einer Eingangsspannung (S130) zu laden;
Einschalten des Klemmschalters, um einen Rückstrom in den zweiten Anschluss der Primärspule zu erzeugen, bevor der Hauptschalter eingeschaltet (S110) wird;
Ausschalten des Klemmschalters, bevor der Hauptschalter eingeschaltet wird, um einen äquivalenten Kondensator am gemeinsamen Knoten durch den Rückstrom zu entladen, nachdem der Klemmschalter einen Zeitraum lang (S120) eingeschaltet war, und
Erfassen einer Größenbeziehung zwischen einer Knotenspannung des gemeinsamen Knotens und einer ersten und zweiten Schwellenspannung zu einem vorbestimmten Zeitpunkt nach dem Abschalten des Klemmschalters und vor dem Einschalten (S 140) des Hauptschalters; und
Bestimmen einer Zeitdauer, die der Klemmschalter eingeschaltet ist, bevor der Hauptschalter gemäß der erfassten Größenbeziehung zwischen der Knotenspannung und der ersten und zweiten Schwellenspannung, die zu einem vorbestimmten Zeitpunkt erfasst wird, das nächste Mal eingeschaltet wird, um die Spannung des gemeinsamen Knotens vor dem nächsten Einschalten des Hauptschalters zu steuern, um Schaltverluste des Hauptschalters (S150) zu unterdrücken,
wobei:
die zweite Schwellenspannung kleiner ist als die erste Schwellenspannung; und
wobei der Schritt des Bestimmens einer Zeitdauer, die der Klemmschalter eingeschaltet ist, bevor der Hauptschalter gemäß der erfassten Größenbeziehung zwischen der Knotenspannung und der ersten Schwellenspannung, die zu einem vorbestimmten Zeitpunkt erfasst wird, Folgendes umfasst:
Verlängern der Zeitdauer, die der Klemmschalter eingeschaltet ist, bevor der Hauptschalter das nächste Mal eingeschaltet wird, wenn zu dem vorbestimmten Zeitpunkt erfasst wird, dass die Knotenspannung größer als die erste Schwellenspannung ist;
Beibehalten der Zeitdauer, die der Klemmschalter eingeschaltet ist, bevor der Hauptschalter eingeschaltet wird, wenn erfasst wird, dass die Knotenspannung zu dem vorbestimmten Zeitpunkt kleiner als die erste Schwellenspannung und größer als eine zweite Schwellenspannung ist, und
Verkürzen der Zeitdauer, die der Klemmschalter eingeschaltet ist, bevor der Hauptschalter das nächste Mal eingeschaltet wird, wenn zu dem vorbestimmten Zeitpunkt erfasst wird, dass die Knotenspannung kleiner als die zweite Schwellenspannung ist.

## Revendications

1. Convertisseur de puissance comprenant :
un transformateur (110) comprenant une première bobine primaire (112) et une bobine secondaire (114), une première borne de la première bobine primaire étant agencée de manière à recevoir une tension d'entrée, et la bobine secondaire étant agencée de manière à générer une tension de sortie ;
un condensateur de serrage (120) présentant une première borne couplée à la première borne de la première bobine primaire ;
un interrupteur principal (130) raccordé en série entre une seconde borne de la première bobine primaire et une borne de mise à la terre ;
un interrupteur de serrage (140) présentant une première borne couplée à une seconde borne du condensateur de serrage, et une seconde borne couplée à une première borne de l'interrupteur principal, l'interrupteur de serrage étant raccordé en série entre le condensateur de serrage et l'interrupteur principal, et la seconde borne de l'interrupteur de serrage étant couplée en outre à la seconde borne de la première bobine primaire, de sorte que la seconde borne de l'interrupteur de serrage, la première borne de l'interrupteur principal et la seconde borne de la première bobine primaire se croisent en un nœud commun (N1) ; et
un circuit de commande (150) comprenant :
un détecteur de tension (152) pour comparer une tension de nœud du nœud commun à une première tension seuil et une seconde tension seuil ; et
un générateur de signal de commande (154) configuré pour, périodiquement :
allumer l'interrupteur principal,
allumer l'interrupteur de serrage avant que l'interrupteur principal ne soit allumé afin de générer un courant inverse circulant dans la seconde borne de la première bobine primaire,
éteindre l'interrupteur de serrage avant que l'interrupteur principal ne soit allumé afin de décharger un condensateur équivalent (Cₚ) sur le nœud commun par le biais du courant inverse après que l'interrupteur de serrage a été allumé pendant une certaine période, et
déterminer une durée pendant laquelle l'interrupteur de serrage est allumé avant que l'interrupteur principal ne soit allumé la fois suivante en fonction d'une relation d'amplitude, détectée par le détecteur de tension, entre la tension de nœud et les première et seconde tensions seuil après que l'interrupteur de serrage est éteint et à un instant prédéterminé avant que l'interrupteur principal ne soit allumé, commandant ainsi la tension du nœud commun avant que l'interrupteur principal ne soit allumé la fois suivante afin de supprimer une perte de commutation de l'interrupteur principal,
dans lequel :
la seconde tension seuil est inférieure à la première tension seuil ; et lorsque le détecteur de tension détecte que la tension de nœud est inférieure à la première tension seuil et supérieure à la seconde tension seuil à l'instant prédéterminé, le générateur de signal de commande est configuré pour maintenir la durée pendant laquelle l'interrupteur de serrage est allumé avant que l'interrupteur principal ne soit allumé ;
lorsque le détecteur de tension (152) détecte que la tension de nœud est supérieure à la première tension seuil à l'instant prédéterminé, le générateur de signal de commande (154) est configuré pour prolonger la durée pendant laquelle l'interrupteur de serrage (140) est allumé avant que l'interrupteur principal (130) ne soit allumé la fois suivante ; et
lorsque le détecteur de tension (152) détecte que la tension de nœud est inférieure à la seconde tension seuil à l'instant prédéterminé, le générateur de signal de commande (154) est configuré pour raccourcir la durée pendant laquelle l'interrupteur de serrage (140) est allumé avant que l'interrupteur principal (130) ne soit allumé la fois suivante.

2. Convertisseur de puissance selon la revendication 1, dans lequel le détecteur de tension (152) comprend un premier comparateur (1521) présentant une première borne (VSW) couplée à la première borne de l'interrupteur principal (130), et une seconde borne (VTH1) utilisée pour recevoir la première tension seuil.

3. Convertisseur de puissance selon la revendication 1, dans lequel le détecteur de tension (152) comprend une première résistance (RA1) présentant une première borne couplée à la première borne de l'interrupteur principal (130) ; une seconde résistance (RA2) présentant une première borne couplée à une seconde borne de la première résistance, et une seconde borne couplée à une borne de mise à la terre (GND) ; et un premier comparateur (2521) présentant une première borne couplée à la seconde borne de la première résistance, et une seconde borne (VRA1) pour recevoir une première tension de référence correspondant à la première tension seuil.

4. Convertisseur de puissance selon la revendication 1, dans lequel le détecteur de tension (152) comprend une diode (D1) présentant une cathode couplée à la première borne de l'interrupteur principal (130) ; une résistance (RB1) présentant une première borne couplée à une anode de la diode et une seconde borne destinée à recevoir une tension de polarisation prédéterminée (VD1) ; et un premier comparateur (3521) présentant une première borne couplée à la première borne de la résistance et une seconde borne (VRB1) destinée à recevoir une première tension de référence correspondant à la première tension seuil ; dans lequel la tension de polarisation prédéterminée est supérieure à la première tension de référence.

5. Convertisseur de puissance selon la revendication 1, comprenant en outre une seconde bobine primaire (412) pour générer une tension de détection correspondant à la tension de nœud, dans lequel le détecteur de tension (450) comprend :
une première résistance (RC1) présentant une première borne couplée à une première borne de la seconde bobine primaire ;
une seconde résistance (RC2) présentant une première borne couplée à une seconde borne de la première résistance, et une seconde borne couplée à une seconde borne de la seconde bobine primaire et à une borne de mise à la terre (GND) ; et
un premier comparateur (4521) présentant une première borne couplée à la seconde borne de la première résistance, et une seconde borne (VRC1) destinée à recevoir une première tension de référence correspondant à la première tension seuil.

6. Convertisseur de puissance selon une quelconque revendication précédente, dans lequel le générateur de signal de commande est configuré pour allumer l'interrupteur de serrage (140) en générant un signal de commande de serrage (SIG_{C1}) et pour régler le temps pendant lequel l'interrupteur de serrage est allumé à chaque fois en réglant la largeur d'impulsion du signal de commande de serrage.

7. Convertisseur de puissance selon la revendication 6, dans lequel le circuit de commande (150) comprend un circuit numérique, et le générateur de signal de commande comprend un registre et un compteur, le générateur de signal de commande (154) commande la largeur d'impulsion du signal de commande de serrage (SIG_{C1}) en stockant une valeur associée à la largeur d'impulsion dans le registre et en amenant le compteur à effectuer le comptage en fonction de la valeur.

8. Convertisseur de puissance selon la revendication 6, dans lequel le circuit de commande (150) comprend un circuit analogique, et le générateur de signal de commande comprend un second comparateur pour comparer une seconde tension de référence avec une onde en dents de scie ou une onde triangulaire, dans lequel le générateur de signal de commande commande une largeur d'impulsion du signal de commande de serrage (SIG_{C1}) en réglant un mode d'onde de l'onde triangulaire ou de l'onde en dents de scie ou en réglant la tension de référence.

9. Convertisseur de puissance selon une quelconque revendication précédente,
comprenant une puce à semi-conducteur comprenant le circuit de commande (150).

10. Procédé (M1) de fonctionnement d'un convertisseur de puissance, dans lequel le convertisseur de puissance comprend un transformateur, un interrupteur principal, un condensateur de serrage et un interrupteur de serrage, le transformateur comprend une bobine primaire et une bobine secondaire, l'interrupteur principal est raccordé en série entre une seconde borne de la bobine primaire et une borne de mise à la terre, une première borne de l'interrupteur de serrage est couplée à une seconde borne du condensateur de serrage, une seconde borne de l'interrupteur de serrage est couplée à la première borne de l'interrupteur principal et à la seconde borne de la bobine primaire, et la seconde borne de l'interrupteur de serrage, la première borne de l'interrupteur principal et la seconde borne de la bobine primaire se croisent en un nœud commun, le procédé comprenant, périodiquement :
le fait d'allumer l'interrupteur principal pour charger la bobine primaire avec une tension d'entrée (S130) ;
le fait d'allumer l'interrupteur de serrage afin de générer un courant inverse dans la seconde borne de la bobine primaire avant que l'interrupteur principal ne soit allumé (S110) ;
le fait d'éteindre l'interrupteur de serrage avant que l'interrupteur principal ne soit allumé afin de décharger un condensateur équivalent sur le nœud commun par le biais du courant inverse après que l'interrupteur de serrage a été allumé pendant une certaine période (S120) ;
la détection d'une relation d'amplitude entre une tension de nœud du nœud commun et une première et une seconde tension seuil à un instant prédéterminé après que l'interrupteur de serrage a été éteint et avant que l'interrupteur principal ne soit allumé (S140) ; et
la détermination d'une durée pendant laquelle l'interrupteur de serrage est allumé avant que l'interrupteur principal ne soit allumé la fois suivante en fonction de la relation d'amplitude entre la tension de nœud et les première et seconde tensions seuil détectée à l'instant prédéterminé afin de commander la tension du nœud commun avant que l'interrupteur principal ne soit allumé la fois suivante afin de supprimer une perte de commutation de l'interrupteur principal (S150),
dans lequel :
la seconde tension seuil est inférieure à la première tension seuil ; et
dans lequel l'étape consistant à déterminer une durée pendant laquelle l'interrupteur de serrage est allumé avant que l'interrupteur principal ne soit allumé la fois suivante en fonction de la relation d'amplitude entre la tension de nœud et la première tension seuil détectée à l'instant prédéterminé comprend :
la prolongation de la durée pendant laquelle l'interrupteur de serrage est allumé avant que l'interrupteur principal ne soit allumé la fois suivante lorsqu'il est détecté, à l'instant prédéterminé, que la tension de nœud est supérieure à la première tension seuil ;
le maintien de la durée pendant laquelle l'interrupteur de serrage est allumé avant que l'interrupteur principal ne soit allumé, lorsqu'il est détecté que la tension de nœud est inférieure à la première tension seuil et supérieure à une seconde tension seuil à l'instant prédéterminé, et
le raccourcissement de la durée pendant laquelle l'interrupteur de serrage est allumé avant que l'interrupteur principal ne soit allumé la fois suivante lorsqu'il est détecté, à l'instant prédéterminé, que la tension de nœud est inférieure à la seconde tension seuil.
